# EUROPÄISCHE PATENTSCHRIFT

(11) **EP 3 200 990 B1**
(45) Veröffentlichungstag und Bekanntmachung des Hinweises auf die Patenterteilung: **22.07.2020**
(21) Anmeldenummer: 15767502.6
(22) Anmeldetag: 24.09.2015
(51) Int. Cl.: B32B 7/00, B32B 7/02, B32B 7/04, B32B 7/12, B32B 11/00, B32B 11/04, B32B 13/00, B32B 13/04, B32B 27/00, B32B 27/06, B32B 27/08, B32B 27/18, B32B 27/20, B32B 27/28, B32B 27/30, B32B 27/32, B32B 27/34, B32B 27/36

(54) **BARRIERESCHICHTEN AUF ABDICHTUNGSMEMBRANEN**
BARRIER LAYERS ON SEALING MEMBRANES.
COUCHES DE BARRIÈRE SUR LES MEMBRANES ÉTANCHES.

(30) Priorität: 30.09.2014 EP 14186959
(43) Veröffentlichungstag der Anmeldung: 09.08.2017
(73) Patentinhaber: Sika Technology AG, 6340 Baar (CH)
(72) Erfinder: KEISER, Stefan, CH-6103 Schwarzenberg (CH); PIRONATO, Yannic, 6003 Luzern (CH)
(74) Vertreter: Sika Patent Attorneys
(86) Internationale Anmeldenummer: PCT/EP2015/072012
(87) Internationale Veröffentlichungsnummer: WO 2016/050607

(56) Entgegenhaltungen:
- EP-A1- 2 299 005
- WO-A1-2014/029763
- US-A- 5 824 401
- US-A1- 2011 197 427
- US-A1- 2013 052 386
- US-A1- 2014 248 466

## Beschreibung

### Technisches Gebiet

Die Erfindung betrifft Membranen für Abdichtungssysteme, die im Hoch- und Tiefbau eingesetzt werden können.

### Stand der Technik

Bei Abdichtungssystemen mit Membranen stehen verschiedene aneinander grenzende Schichten in direktem Kontakt. Aufgrund möglicher Migrationsphänomene ist die Verträglichkeit dieser Schichten untereinander häufig ein Problem.

Liegt z.B. eine Weich-PVC-Membran auf einer EPS-Wärmedämmung, muss ein Trennglasvlies dazwischen gelegt werden, damit der Weichmacher aus der Membran nicht in das expandierte Polystyrol (EPS) migriert und somit die Schaumstruktur der EPS-Wärmedämmung kollabieren lässt. Zudem würde das PVC durch den Verlust an Weichmacher versteifen.

TPO-Membranen sind Membranen auf Basis thermoplastischer Elastomere auf Olefinbasis (TPO). Liegt eine TPO-Membran auf einer (alten) bituminösen Abdichtung, muss ein Trennfilz dazwischen gelegt werden, damit keine Substanzen aus dem Bitumen in das TPO migrieren und dadurch die Membran verfärben und deren UV-Stabilität massiv verschlechtern würde.

Es hat sich gezeigt, dass insbesondere bei Membranaufbauten mit Klebstoffschichten Migrationsphänomene eine entscheidende Rolle in Bezug auf die Leistungsfähigkeit eines Abdichtungssystems spielen. Beispielsweise können grosse Mengen Weichmacher aus der Membran in den Kleber migrieren (vor allem bei Weich-PVC) oder umgekehrt auch Kleberbestandteile in die Membran wandern. Dies wird insbesondere beim Kontakt von Hotmelt- und bituminösen Klebstoffen mit Polyolefin-Membranen beobachtet. Die veränderte Zusammensetzung verändert die Eigenschaften der Membranen und auch der Klebstoffe oft so stark, dass die Funktion nicht mehr gewährleistet werden kann.

Bei diesen Systemen ergeben sich daher insbesondere folgende Probleme:
- Weichmacherverlust von PVC-p verschlechtert die mechanischen Eigenschaften der Membran
- Die Aufnahme von Klebstoffbestandteilen führt zu einer starken Beeinträchtigung der UV-Beständigkeit/Alterungsbeständigkeit der TPO-Membran
- Verlust von Klebstoffbestandteilen führt zu mangelhaften Klebeeigenschaften
- Hohe Weichmacheraufnahme im Klebstoff kann auch zu einer nicht tolerierbaren Veränderung der Klebeeigenschaften führen.

Zur Überwindung dieser Nachteile werden Sperrschichten enthaltende Systeme beschrieben. So beschreibt EP 1500493 A1 eine farbige, verschweißbare Mehrschicht-Abdichtbahn, die eine farb- und witterungsbeständige, verschweißbare Farbpolymerschicht, eine nichtmetallische Sperrschicht und eine Bitumenschicht sowie gegebenenfalls eine oder mehrere Schichten ausgewählt aus Flammschutzschichten, Schutzschichten, Haftvermittlerschichten und Trägerschichten umfasst, wobei die nichtmetallische Sperrschicht zwischen der Farbpolymerschicht und der Bitumenschicht angeordnet ist.

Die Verfahren zur Herstellung solcher Systeme mit Barriereschichten sind aber aufwändig, da zusätzliche Beschichtungsschritte und/oder der Einsatz von Klebstoff- oder Haftvermittlerschichten erforderlich sind. Dadurch entstehen deutlich höhere Produktionskosten.

Es gelingt auch teilweise nicht, die Barriereschichten dauerhaft mit den Membranen zu verbinden. Sie können sich z.B. aufgrund ungenügender Haftung im Wasser teilweise von der Membran ablösen. Polyolefine sind überhaupt schwierig zu beschichten, was die Probleme für Polyolefinmembranen zusätzlich verschärft. Für eine Lackierung von Membranen mit einer Barriereschicht ist überdies zusätzliches Produktionsequipment erforderlich ist.

US 2011/0197427 A1 betrifft eine wasserdichte Membran mit einer Barriereschicht, einer Kompositschicht und einem dazwischenliegenden maschenartig aufgetragenen Dichtmittel, welches bevorzugt eine Acrylatverbindung, ein Polyurethan-Polymer, ein silanterminiertes Polymer oder ein Polyolefin ist.

EP 2299005 A1 betrifft eine wasserdichte Membran mit einer Schottschicht und einer Kontaktschicht aus einem Kontaktvermittler und einem Haftmittel, wobei der Kontaktvermittler mittels Haftmittel mit der Schottschicht verbunden ist.

US 5824401 beschreibt eine wasserundurchlässige Membran für Bauoberflächen, die eine bituminöse Klebstoffmembran und darüber mindestens drei Polymerschichten umfasst, von denen eine ölbeständig sein kann.

WO 2014/029763 A1 betrifft eine wasserdichte Membran für Beton mit einer Schottschicht und einer Funktionsschicht aus einem Kontaktvermittler und einem Haftmittel, wobei der Kontaktvermittler mittels Haftmittel mit der Schottschicht verbunden ist.

### Darstellung der Erfindung

Die Aufgabe der Erfindung bestand in der Bereitstellung von Abdichtungssystemen mit Membranen für den Hoch- und Tiefbau, die die vorstehend diskutierten Schwierigkeiten nach dem Stand der Technik überwinden. Dabei sollten auch Abdichtungssysteme bereitgestellt werden, welche bisher aufgrund von Materialunverträglichkeiten nicht realisiert werden konnten.

Insbesondere sollen Abdichtungsmembranen in Kombination mit Bitumen oder Hotmelt-basierten Selbstklebemassen ermöglicht werden, um kostengünstige selbstklebende Membranen für Abdichtungssysteme bereitzustellen.

Es sollte eine stabile und dauerhafte Haftung der Barriereschichten an die Membran erreicht werden. Des Weiteren sollten die Abdichtungsmembranen durch ein einfaches und damit preisgünstiges Verfahren hergestellt werden können.

Überraschenderweise wurde festgestellt, dass diese Aufgabe gelöst werden konnte, indem in der Verpackungsindustrie übliche Verpackungsfolien mit einer Barriereschicht für den Aufbau von Barriereschichten für Abdichtungsmembranen eingesetzt werden, wobei Verpackungsfolien mit einer zur Membran werkstofflich kompatiblen Aussenschicht ausgewählt werden. Solche an sich üblichen und preisgünstigen Verpackungsfolien können bei der Herstellung der Membran auf der Extrusionslinie in einfacher Weise direkt auf die Membran laminiert werden, um die erfindungsgemäße Abdichtungsmembran zu erhalten. Die optionale Aufbringung einer Haftkleberschicht kann auf übliche Weise erfolgen.

Die Erfindung betrifft daher eine Abdichtungsmembran gemäss Anspruch 1. Diese Abdichtungsmembran umfasst a) eine thermoplastische Polyolefinmembran umfassend mindestens ein Polymer ausgewählt aus Ethylen-Homopolymer, Ethylen-Copolymer, Propylen-Homopolymer oder Propylen-Copolymer und b) eine Barrierefolie umfassend b1) eine Barierreschicht umfassend mindestens ein Polymer ausgewählt aus Ethylen-Vinylalkohol-Copolymer, Polyamid oder Polyester und b2) eine Deckschicht umfassend mindestens ein Polymer ausgewählt aus Ethylen-Homopolymer, Ethylen-Copolymer, Propylen-Homopolymer oder Propylen-Copolymer, wobei die Barrierefolie vollflächig oder teilflächig auf die Polyolefinmembran laminiert ist, so dass die Deckschicht der Barrierefolie direkt mit der Polyolefinmembran verbunden ist, und die Deckschicht und die Polyolefinmembran beide ethylenbasiert sind oder die Deckschicht und die Polyolefinmembran beide propylenbasiert sind.

Durch die erfindungsgemäße Abdichtungsmembran kann überraschenderweise auf aufwändigere Barrierekonzepte im Systemaufbau verzichtet werden. Die Bereitstellung einer teuren Beschichtungsvorrichtung ist nicht erforderlich. Der Aufbau ermöglicht ein vereinfachtes Herstellungsverfahren der Abdichtungsmembran und den Einsatz von kostengünstigen PSA-Klebstoffen zur Bereitstellung selbstklebender Abdichtungssysteme mit einem deutlich besseren Preis-Leistungs-Verhältnis. Zudem ergibt sich aufgrund der deutlich verbesserten Materialverträglichkeiten eine bessere Langzeit-Performance, sowohl in Bezug auf die Klebstoffhaftung wie auch in Bezug auf das Langzeitverhalten der Abdichtungsmembran.

Es war besonders überraschend, dass die erfindungsgemäßen Abdichtungsmembranen trotz Barriereschicht mit herkömmlichen thermischen Schweissgeräten, z.B. mit einem Handschweissgerät der Firma LEISTER, verschweißbar bleiben. Obwohl die Mehrschichtfolien sehr dünn sind, wird der Schichtaufbau beim Kaschieren und Verschweissen nicht beschädigt. Die Polyolefinschichten bleiben immer flächig erhalten und das Barrierematerial im Kern stört die Verbindung zu keinem Zeitpunkt.

Die Erfindung betrifft auch ein Verfahren zur Herstellung der Abdichtungsmembran und deren Verwendung wie in den weiteren unabhängigen Ansprüchen definiert. Bevorzugte Ausführungsformen sind in den abhängigen Ansprüchen beschrieben.

### Kurze Beschreibung der Zeichnung

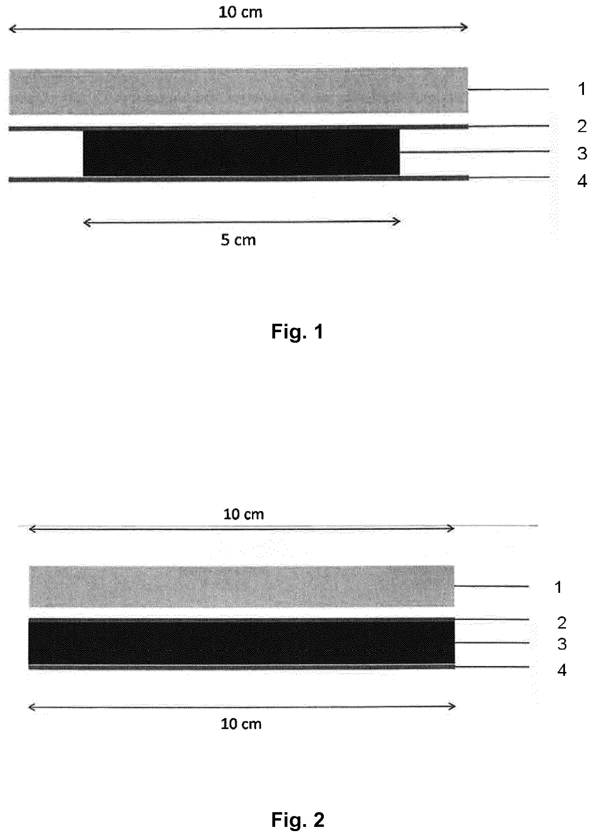

Die Fig. 1 und 2 zeigen rein schematisch den Versuchsaufbau für die Bestimmung des Stofftransports von untersuchten Abdichtungssystemen.

### Weg zur Ausführung der Erfindung

Bei der thermoplastischen Polyolefinmembran, der Barriereschicht und der Deckschicht handelt es sich insbesondere um Kunststoffschichten, die aus einem Polymer oder einer Mischung von zwei oder mehr Polymeren gebildet werden. Die Schichten können gegebenenfalls wie in der Technik üblich jeweils ein oder mehrere Additive, z.B. ausgewählt aus Gleitmitteln, Stabilisatoren gegen thermische Schädigung, Alterungs- und Lichtschutzmitteln, Antioxidationsmitteln, Antistatika, leitfähige Mitteln, Flammschutzmitteln, Farbstoffen, wie Pigmenten, Weichmachern, Flexibilisatoren oder Füll- und Verstärkungsstoffen, enthalten.

Die Abdichtungsmembran umfasst a) eine thermoplastische Polyolefinmembran umfassend mindestens ein Polymer ausgewählt aus Ethylen-Homopolymer, Ethylen-Copolymer, Propylen-Homopolymer oder Propylen-Copolymer. Die thermoplastische Polyolefinmembran kann ein Polymer oder einen Blend aus zwei oder mehr Polymeren umfassen.

Die thermoplastische Polyolefinmembran umfasst bevorzugt mindestens 40 Gew.-% mindestens eines Polymers ausgewählt aus Ethylen-Homopolymer, Ethylen-Copolymer, Propylen-Homopolymer oder Propylen-Copolymer, bezogen auf das Gesamtgewicht der thermoplastischen Polyolefinmembran. Die thermoplastische Polyolefinmembran umfasst bevorzugt bis zu 60 Gew.-% Füllstoffe und Additive, bezogen auf das Gesamtgewicht der thermoplastischen Polyolefinmembran.

Die thermoplastische Polyolefinmembran umfasst bevorzugt 70 bis 99 Gew.-%, insbesondere 80 bis 98 Gew.-%, mindestens eines Polymers ausgewählt aus Ethylen-Homopolymer, Ethylen-Copolymer, Propylen-Homopolymer oder Propylen-Copolymer, bezogen auf das Gesamtgewicht der thermoplastischen Polyolefinmembran. Die thermoplastische Polyolefinmembran umfasst bevorzugt 1 bis 30 Gew.-%, bevorzugter 2 bis 20 Gew.-%, Füllstoffe und Additive, bezogen auf das Gesamtgewicht der thermoplastischen Polyolefinmembran.

Bevorzugt handelt es sich bei dem mindestens einen Polymer ausgewählt aus Ethylen-Homopolymer, Ethylen-Copolymer, Propylen-Homopolymer oder Propylen-Copolymer für die thermoplastische Polyolefinmembran um mindestens ein Polymer ausgewählt aus Polyethylen mit hoher Dichte (HDPE), Polyethylen mit mittlerer Dichte (MDPE), Polyethylen mit tiefer Dichte (LDPE), Polyethylen (PE), Polypropylen (PP), Ethylen-Vinylacetat-Copolymer (EVA), Ethylen-n-Alken-Copolymer oder Propylen-n-Alken-Copolymer, wie insbesondere Ethylen-Propylen-Copolymer (EPM) oder Ethylen-Propylen-Dien-Copolymer (EPDM). Das n-Alken kann z.B. ein α-Olefin mit 3 bis 12 C-Atomen sein, z.B. Propen, Buten oder Octen.

Die thermoplastische Polyolefinmembran umfasst bevorzugt mindestens 40 Gew.-% mindestens eines der vorstehend genannten Polymere, bezogen auf das Gesamtgewicht der thermoplastischen Polyolefinmembran. Die thermoplastische Polyolefinmembran umfasst bevorzugt 70 bis 99 Gew.-%, insbesondere 80 bis 98 Gew.-%, mindestens eines der vorstehend genannten Polymere, bezogen auf das Gesamtgewicht der thermoplastischen Polyolefinmembran.

Die thermoplastische Polyolefinmembran ist bevorzugt eine TPO-Membran, d.h. eine Membran, die thermoplastisches Elastomer auf Olefinbasis umfasst. Thermoplastische Elastomere auf Olefinbasis können aus den vorstehend genannten Ethylen-Homopolymeren, Ethylen-Copolymeren, Propylen-Homopolymeren, Propylen-Copolymeren oder Mischungen davon gebildet sein.

Die thermoplastische Polyolefinmembran ist eine ethylenbasierte oder propylenbasierte Polyolefinmembran, insbesondere eine ethylenbasierte oder propylenbasierte Polyolefinmembran, die thermoplastisches Elastomer auf Olefinbasis umfasst.

Unter Ethylen-Copolymeren werden Copolymere verstanden, die Ethylen-Einheiten enthalten. Unter Propylen-Copolymeren werden Copolymere verstanden, die Propylen-Einheiten enthalten. Copolymere, die sowohl Ethylen- als auch Propylen-Einheiten enthalten, sind hier Ethylen-Copolymere, wenn der Gewichtsanteil an Ethylen-Einheiten größer ist als der Gewichtsanteil an Propylen-Einheiten, bzw. Propylen-Copolymere, wenn der Gewichtsanteil an Propylen-Einheiten größer ist als der Gewichtsanteil an Ethylen-Einheiten. Es ist bevorzugt, dass der Anteil an Ethylen-Einheiten in Ethylen-Copolymeren mehr als 50 Gew.-% beträgt und der Anteil an Propylen-Einheiten in Propylen-Copolymeren mehr als 50 Gew.-% beträgt.

In ethylenbasierten thermoplastischen Polyolefinmembranen beträgt der Gewichtsanteil an Ethylen-Homopolymeren und/oder Ethylen-Copolymeren mehr als 50 Gew.-%, bezogen auf das Gesamtgewicht der Polymere in der Polyolefinmembran. In propylenbasierten thermoplastischen Polyolefinmembranen beträgt der Gewichtsanteil an Propylen-Homopolymeren und/oder Propylen-Copolymeren mehr als 50 Gew.-%, bezogen auf das Gesamtgewicht der Polymere in der Polyolefinmembran.

Thermoplastische Polyolefinmembranen werden für Abdichtungen im Hoch- und Tiefbau eingesetzt und sind im Handel erhältlich, z.B. unter der Bezeichnung Sarnafil® oder Sikaplan® von Sika, wobei es sich um ethylenbasierte Polyolefinmembranen oder propylenbasierte Polyolefinmembranen handelt.

Vorzugsweise weist die thermoplastische Polyolefinmembran eine Dicke im Bereich von 0,1 bis 10 mm, insbesondere 0,5 bis 3 mm, auf.

Die thermoplastische Polyolefinmembran kann gegebenenfalls ein oder mehrere Additive einschließlich Füllstoffen enthalten. Beispiele für Additive wurden vorstehend angeführt. Die thermoplastische Polyolefinmembran enthält z.B. gegebenenfalls mindestens ein Additiv ausgewählt aus Flammschutzmitteln, Pigmenten, Stabilisatoren, insbesondere UV-Stabilisatoren, Antioxidationsmitteln oder Füllstoffen.

Die thermoplastische Polyolefinmembran kann ein- oder mehrschichtig aufgebaut sein. Vorzugsweise ist die thermoplastische Polyolefinmembran ein- oder zweischichtig. Es ist aber auch z.B. eine drei- oder vierschichtige thermoplastische Polyolefinmembran möglich. Die Polymerzusammensetzung kann bei zwei- oder mehrschichtigen Membranen in allen Schichten gleich oder verschieden sein.

Bei einer zweischichtigen thermoplastischen Polyolefinmembran können z.B. in der äußeren Schicht gegebenenfalls Pigmente und/oder UV-Stabilisatoren enthalten sein und in der inneren Schicht gegebenenfalls Farbpigmente wie Russ. Die äußere Schicht der thermoplastischen Polyolefinmembran ist dabei in der erfindungsgemäßen Abdichtungsmembran die Schicht, die der Barrierefolie abgewandt ist. Die innere Schicht ist in der erfindungsgemäßen Abdichtungsmembran entsprechend die Schicht, die mit der Deckschicht der Barrierefolie verbunden ist.

Weiter kann die thermoplastische Polyolefinmembran gegebenenfalls ein Trägerelement enthalten. Das Trägerelement trägt zur Formstabilität der Membran bei. Vorzugsweise handelt es sich um einen Faserwerkstoff oder ein Gitter, insbesondere einen Faserwerkstoff. Das Trägerelement wird bei den vorstehend angeführten Polymeren und deren Mengenangaben in der Membran nicht berücksichtigt.

Unter dem Begriff Faserwerkstoff ist ein Werkstoff zu verstehen, welcher aus Fasern aufgebaut ist. Die Fasern umfassen oder bestehen aus anorganischem oder synthetischem Material. Insbesondere handelt es sich um anorganische Fasern, wie beispielsweise Glasfasern. Als synthetische Fasern sind vor allem bevorzugt Fasern aus Polyester oder aus einem Homo- oder Copolymeren von Ethylen und/oder Propylen oder aus Viskose zu nennen. Die Fasern können hierbei Kurzfasern oder Langfasern, gesponnene, gewebte oder ungewebte Fasern oder Filamente sein. Das aus Fasern aufgebaute Trägerelement kann z.B. ein Gewebe, Gelege oder Gewirke sind. Besonders bevorzugt als Faserwerkstoff ist ein Vlies oder ein Gelege.

Vorzugsweise ist das Trägerelement in die Membran eingearbeitet. Ferner ist es vorteilhaft, wenn das Trägerelement Zwischenräume aufweist, welche zumindest teilweise vom Material der Membran durchsetzt sind. Dies ist einem guten Verbund von Membran und Trägerelement zuträglich.

Die Barrierefolie umfasst eine Barriereschicht und eine Deckschicht. Die Barriereschicht umfasst mindestens ein Polymer ausgewählt aus Ethylen-Vinylalkohol-Copolymer (EVOH), Polyamid (PA) oder Polyester. Beispiele für Polyamide sind PA 66 aus Hexamethylendiamin und Adipinsäure, PA 610 aus Hexamethylendiamin und Sebacinsäure, PA 6 aus Caprolactam oder Aminoundecansäure, PA 11 aus Undecanlactam oder PA 12 aus Laurinlactam oder Aminododecansäure. Beispiele für Polyester sind Polyethylenterephthalat (PET), Polybutylenterephthalat (PBT) und Polyethylennaphthalat (PEN). Die Barriereschicht umfasst bevorzugt EVOH oder PA.

Die Barrierefolie kann eine Barriereschicht oder zwei oder mehr gleiche oder verschiedene Barriereschichten umfassen, z.B. eine PA-Schicht und eine EVOH-Schicht. Für die hier angestrebte Lösung reicht aber in der Regel eine Barriereschicht vollständig aus.

Die Deckschicht der Barrierefolie umfasst mindestens ein Polymer ausgewählt aus Ethylen-Homopolymer, Ethylen-Copolymer, Propylen-Homopolymer oder Propylen-Copolymer.

Das Ethylen-Homopolymer, Ethylen-Copolymer, Propylen-Homopolymer oder Propylen-Copolymer für die Deckschicht der Barrierefolie ist vorzugsweise mindestens ein Polymer ausgewählt aus Polyethylen mit hoher Dichte (HDPE), Polyethylen mit mittlerer Dichte (MDPE), Polyethylen mit tiefer Dichte (LDPE), Polyethylen (PE), Polypropylen (PP), Ethylen-Vinylacetat-Copolymer (EVA), Maleinsäureanhydrid-gepfropftes Polyethylen oder Maleinsäureanhydrid-gepfropftes Polypropylen.

Die Deckschicht der Barrierefolie ist ethylenbasiert oder propylenbasiert, wobei die gleiche Definition wie für die thermoplastische Polyolefinmembran gilt, d.h. in der ethylenbasierten Deckschicht beträgt der Gewichtsanteil an Ethylen-Homopolymeren und/oder Ethylen-Copolymeren mehr als 50 Gew.-%, bezogen auf das Gesamtgewicht der Polymere in der Deckschicht, und in der propylenbasierten Deckschicht beträgt der Gewichtsanteil an Propylen-Homopolymeren und/oder Propylen-Copolymeren mehr als 50 Gew.-%, bezogen auf das Gesamtgewicht der Polymere in der Deckschicht.

Die Deckschicht der Barrierefolie ist insbesondere eine thermoplastische Schicht. Die Deckschicht ist bei Raumtemperatur (23°C) fest und nicht klebend. Die Deckschicht ist insbesondere eine heißsiegelfähige Deckschicht.

Es ist bevorzugt, dass mindestens ein in der Deckschicht enthaltenes Polymer einen niedrigeren Schmelzpunkt als ein in der Polyolefinmembran enthaltenes Polymer aufweist. Der Schmelzpunkt von Polymeren kann mittels dynamischer Differenzkalorimetrie (DSC) bestimmt werden. Da in den jeweiligen Schichten Blends von zwei oder mehr Polymeren enthalten sein können, können die Schichten entsprechend zwei oder mehr Schmelzpunkte zeigen.

Die Deckschicht kann gegebenenfalls ein oder mehrere Additive enthalten. Beispiele für Additive wurden vorstehend angeführt.

Solche Barrierefolien werden in großem Umfang als Verpackungsfolien eingesetzt. Im Handel sind solche Barrierefolien daher in großer Vielfalt erhältlich und können für die vorliegende Erfindung eingesetzt werden. Vorzugsweise weist die Barrierefolie eine Dicke im Bereich von 30 bis 130 µm, insbesondere 40 bis 60 µm, auf. Die Schichtdicke der Deckschicht der Barrierefolie kann z.B. 10 bis 60 µm, bevorzugt 15 bis 25 µm, betragen.

Die Barrierefolie ist vorzugsweise eine Blasfolie, insbesondere eine Mehrschicht-Blasfolie. Die Barrierefolie kann aber auch z.B. durch Kleberkaschierung oder Coextrusion gebildet sein.

Die Barrierefolie kann zwei oder mehr als zwei Schichten aufweisen, insbesondere 2 bis 5 Schichten, wobei 5-schichtige Barrierefolien besonders geeignet sind. Wie bereits erläutert können gegebenenfalls auch zwei oder mehr Barriereschichten enthalten sein. Die Barrierefolie kann gegebenenfalls auch zwei Deckschichten wie vorstehend definiert von gleicher oder unterschiedlicher Zusammensetzung auf beiden Seiten als jeweils äußere Schicht aufweisen, was im Allgemeinen auch bevorzugt ist. Weitere optionale Schichten, die in der Barrierefolie enthalten sein können, sind z.B. ein oder mehrere Haftvermittlerschichten.

Haftvermittlerschichten sind Schichten, die zur Verbindung von zwei Schichten zwischengeschaltet sind. Dies ist häufig erforderlich, wenn die zu verbindenden Schichten wenig kompatibel sind. Je nach Ausführungsform der Schichten kann z.B. zwischen der Deckschicht und der Barriereschicht eine Haftvermittlerschicht erforderlich sein. Deckschicht und Barriereschicht können aber auch direkt miteinander verbunden sein.

Die Verbindung der Barriereschicht, z.B. eine EVOH- oder PA-Schicht, mit der Deckschicht kann in der Barrierefolie vorzugsweise über ein Haftvermittlerschicht (Tie-layer) sichergestellt werden. Oft werden dabei, insbesondere im Mehrschicht-Blasfolienextrusionsprozess, Anhydrid-modifizierte Polyolefine, z.B. Maleinsäureanhydrid-gepfropftes Polyethylen oder Maleinsäureanhydrid-gepfropftes Polypropylen, eingesetzt.

Trägerschichten sind z.B. aus Polyester, Polypropylen, Polyvinylchlorid, Polyamid, Polyethylen oder Polystyrol. Im Vergleich zu den Deckschichten sind die Trägerschichten in der Regel nicht heißsiegelfähig.

Beispiele für den Aufbau der Barrierefolie aus Barriereschicht (BS), Deckschicht (DS) sowie gegebenenfalls Haftvermittlerschicht (HV) und/oder Trägerschicht sind z.B.:
2-schichtig: DS/BS
3-schichtig: DS/HV/BS; DS/BS/DS; DS/BS/TS
4-schichtig: DS/HV/BS/DS; DS/HV/BS/TS
5-schichtig: DS/HV/BS/HV/DS; DS/HV/BS/HV/TS

In der erfindungsgemäßen Abdichtungsmembran ist die Barrierefolie auf die thermoplastische Polyolefinmembran laminiert, so dass die Deckschicht der Barrierefolie direkt mit der Polyolefinmembran verbunden ist. Unter "direkt verbunden" wird verstanden, dass keine weitere Schicht oder Substanz zwischen der Deckschicht der Barrierefolie und der Polyolefinmembran vorliegt und die Deckschicht und die Polyolefinmembran aneinander haften. Am Übergang zwischen zwei Werkstoffen können die beiden Werkstoffe ineinander vermischt vorliegen.

Die Verbindung der Barrierefolie mit der thermoplastischen Polyolefinmembran über die heißsiegelfähige Deckschicht erfolgt somit insbesondere über eine thermische Laminierung bzw. Kaschierung. Dies ist kostengünstiger als eine Laminierung bzw. Kaschierung mit einem Klebstoff und es werden zudem stabilere und wasserbeständigere Verbindungen zwischen Barrierefolie und thermoplastischer Polyolefinmembran erreicht.

Die Deckschicht bzw. die Barrierefolie kann vollflächig oder teilflächig auf der thermoplastischen Polyolefinmembran laminiert sein, wobei eine vollflächige Laminierung bevorzugt ist. Bei teilflächiger Laminierung sind nur Teile der Polyolefinmembran in einem beliebigen Muster mit der Barrierefolie laminiert.

Ein Beispiel für eine teilflächige Laminierung ist die Laminierung von zwei Barrierefolien jeweils auf die beiden Randbereiche der thermoplastischen Polyolefinmembran in Längsrichtung. Dies kann z.B. zweckmäßig sein, wenn die Abdichtungsmembranen zur Abdichtung von Flächen wie üblich überlappend nebeneinander ausgelegt werden und eine Verklebung nur in den Überlappungsbereichen gewünscht ist.

Die Deckschicht der Barrierefolie, die eine werkstoffliche Verbindung zur thermoplastischen Polyolefinmembran ermöglicht, ist spezifisch auf das Polymer bzw. die Polymermischung der Membran abzustimmen. Daher werden Barrierefolien mit ethylenbasierter Deckschicht eingesetzt, wenn die zu beschichtende thermoplastische Polyolefinmembran eine ethylenbasierte Membran ist. Andererseits werden Barrierefolien mit propylenbasierter Deckschicht eingesetzt, wenn die zu beschichtende thermoplastische Polyolefinmembran eine propylenbasierte Membran ist. Auf diese Weise wird eine geeignete Kompatibilität zwischen den Schichten erreicht. Die Barrierefolien könnten dann im Herstellungsprozess der thermoplastischen Polyolefinmembran, insbesondere TPO-Membran, direkt auf das Produkt laminiert werden.

Entsprechende Folien mit ethylen- oder propylenbasierten Deckschichten sind z.B. von der Firma Huhtamaki erhältlich, welche für die Laminierung auf ethylenbasierten bzw. propylenbasierten Membranen geeignet sind.

Die Abdichtungsmembran kann gegebenenfalls und bevorzugt ferner eine Klebstoffschicht umfassen. Die Klebstoffschicht befindet sich auf der Barrierefolie und zwar auf der Seite der Barrierefolie, die entgegengesetzt zu der Seite der Barrierefolie ist, auf der die thermoplastische Polyolefinmembran angebunden ist.

Der Klebstoff für die Klebstoffschicht kann jeder beliebige Klebstoff sein, der auf diesem Gebiet üblich ist. Vorzugsweise ist der Klebstoff ein Haftklebstoff. Der Klebstoff, insbesondere der Haftklebstoff, der Klebstoffschicht ist vorzugsweise ausgewählt aus einem Bitumen-Klebstoff, einem Schmelzkleber, insbesondere einem PSA-Schmelzkleber oder einem hitzeaktivierbaren Schmelzkleber, oder einer Kautschuk-Klebemasse. PSA bedeutet "pressure sensitive adhesive". Als Bitumen-Klebstoffe eignen sich insbesondere kaltselbstklebende Bitumen-Klebstoffe.

Der Klebstoff kann über gängige Verfahren auf die Barrierefolie aufgebracht werden. Insbesondere wenn die Klebstoffschicht aus einem Haftklebstoff ist, wird auf der Außenseite der Klebstoffschicht vorzugsweise wie üblich ein Release Liner angebracht. Release Liner werden auch als Trennpapier oder Trennfolie bezeichnet.

Die erfindungsgemäße Abdichtungsmembran kann z.B. als Rolle, übliche Breiten sind z.B. 1 bis 2 m, teilweise sogar bis 3 m, wie es für Abdichtungsbahnen üblich ist. Die erfindungsgemäßen Abdichtungsmembranen können direkt auf Untergründe verlegt werden, wo sonst der Einsatz einer separaten Barriereschicht notwendig wäre.

Im Folgenden werden spezielle bevorzugte Ausführungsformen für die Abdichtungsmembranen aufgelistet:
a) Ethylen-Copolymer als Ethylen-basierte Membran, vollflächig aufextrudiert auf eine Barrierefolie mit LDPE-Deckschicht und EVOH- oder PA-Barriereschicht, mit vollflächig aufgetragenem bituminösem Klebstoff
b) Ethylen-Copolymer als Ethylen-basierte Membran, vollflächig aufextrudiert auf eine Barrierefolie mit LDPE-Deckschicht und EVOH- oder PA-Barriereschicht, mit vollflächig aufgetragenem PSA-Schmelzkleber
c) Ethylen-Copolymer als Ethylen-basierte Membran, vollflächig aufextrudiert auf eine Barrierefolie mit LDPE-Deckschicht und EVOH- oder PA-Barriereschicht, mit vollflächig aufgetragener Kautschuk-Klebemasse (z.B. SikaLastomer® oder Butyl)
d) Ethylen-Copolymer als Ethylen-basierte Membran, vollflächig aufextrudiert auf eine Barrierefolie mit LDPE-Deckschicht und EVOH- oder PA-Barriereschicht, mit vollflächig aufgetragenem hitzeaktivierbarem Schmelzkleber
e) Ethylen-Copolymer als Ethylen-basierte Membran, im Überlappungsbereich aufextrudiert auf eine Barrierefolie mit LDPE-Deckschicht und EVOH- oder PA-Barriereschicht, mit im Überlappungsbereich aufgetragenem PSA-Schmelzkleber
f) PP-Blend als propylenbasierte Membran, vollflächig aufextrudiert auf eine Barrierefolie mit PP-Deckschicht und PA- oder EVOH-Barriereschicht, mit vollflächig aufgetragenem bituminösem Klebstoff
g) PP-Blend als propylenbasierte Membran, vollflächig aufextrudiert auf eine Barrierefolie mit PP-Deckschicht und PA- oder EVOH-Barriereschicht, mit vollflächig aufgetragenem PSA-Schmelzkleber
h) PP-Blend als propylenbasierte Membran, vollflächig aufextrudiert auf eine Barrierefolie mit PP-Deckschicht und PA- oder EVOH-Barriereschicht, mit vollflächig aufgetragener Kautschuk-Klebemasse (z.B. SikaLastomer® oder Butyl)
i) PP-Blend als propylenbasierte Membran, vollflächig aufextrudiert auf eine Barrierefolie mit PP-Deckschicht und PA- oder EVOH-Barriereschicht, mit vollflächig aufgetragenem hitzeaktivierbarem Schmelzkleber
j) PP-Blend als propylenbasierte Membran, vollflächig aufextrudiert auf eine Barrierefolie mit PP-Deckschicht und PA- oder EVOH-Barriereschicht.

Anstelle einer Barriereschicht könnten auch Mischformen mit einer höheren Anzahl an Barriereschichten verwendet werden.

Die erfindungsgemäße Abdichtungsmembran kann in einfacher Weise direkt während der Herstellung der thermoplastischen Polyolefinmembran hergestellt werden, indem die durch Extrusion erhaltene Formschmelze der Polyolefinmembran direkt auf die Deckschicht der Barrierefolie aufgebracht wird, wobei der Verbund vorzugsweise unter Druck gesetzt wird. Durch den Energieeintrag aus der Formschmelze schmilzt das heißsiegelfähige Material der Deckschicht auf und verbindet so die Membran mit der Barrierefolie nach Abkühlung.

Überraschenderweise konnten nach obigen Kriterien ausgewählte Mehrschicht-Barrierefolien im Extrusionsprozess direkt, ohne die Verwendung eines Kaschierklebstoffs, mit der Basismembran im Glättwerk der Extrusionslinie faltenfrei verbunden werden, ohne dass die dünne Folie aufgrund des thermischen Schocks abreißt. Die Hitze der Kunststoffschmelze reicht für das Verschmelzen mit der Barrierefoliendeckschicht aus und es ergibt sich ein dauerhaft beständiger Verbund mit der eigentlichen Membran.

Die Laminierung kann zweckmäßiger Weise im Glättwerk bzw. Kalander der Extrusionsanlage erfolgen. Die Barrierefolie kann vor, während oder nach der Aufbringung der Formschmelze der Membran erwärmt werden, vorzugsweise vor oder während der Aufbringung. Dies ist insbesondere dann zweckmäßig, wenn eine propylenbasierte Membran und eine propylenbasierte Deckschicht miteinander verbunden werden, da die propylenbasierten Schichten höhere Schmelzpunkte aufweisen, so dass der Energieeintrag aus der Formschmelze in der Regel nicht ausreicht. Die Erwärmung kann geeigneterweise durch heizbare Glättwerkswalzen der Extrusionsanlage erfolgen.

Die Erfindung betrifft dementsprechend auch ein Verfahren zur Herstellung einer Abdichtungsmembran wie vorstehend beschrieben, wobei das Material für die thermoplastische Polyolefinmembran extrudiert wird, vorzugsweise durch eine Breitschlitzdüse, und die extrudierte Formschmelze im Glättwerk der Extrusionslinie, insbesondere bei der ersten Glättwerkswalze, auf die Deckschicht der Barrierefolie aufgebracht und damit verbunden wird, vorzugsweise unter Druck.

Die Barriefolie kann vor, während oder nach, bevorzugt vor oder während, der Aufbringung der Formschmelze aufgeheizt werden, insbesondere wenn propylenbasierte Polyolefinmembranen und Deckschichten eingesetzt werden.

Die erfindungsgemäße Abdichtungsmembran eignet sich insbesondere zur Abdichtung im Hoch- und Tiefbau.

### Beispiele

### Migrationstests für Bitumen

Folgende Folien wurden als Barrierefolie getestet:
- LDPE-EVOH-Folie: Huhtamaki Qualität 73942, Dicke 60 µm; Folie umfassend zwei LDPE-Deckschichten und EVOH-Schicht im Kern
- PP-PA-Folie: Huhtamaki Qualität 74975, Dicke 100 µm; Folie umfassend zwei PP-Deckschichten und PA-Schicht im Kern
- PP-PA-Release Liner: Huhtamaki, Dicke 25 µm; Folie umfassend zwei PP-Deckschichten und PA-Schicht im Kern, wobei eine Deckschicht eine Siliconisierung aufweist
- LDPE-Foli e:
- PP-Folie:
- BOPP-Folie: Biaxial orientiertes Polypropylen

Als thermoplastische Polyolefinmembranen wurden folgende geprüft:
- PE-Membran: ethylenbasierte TPO-Membran, Dicke 0,5 mm
- PP-Membran: propylenbasierte TPO-Membran, Dicke 0,5 mm

Zur Prüfung der Barriereeigenschaft der Folien wurde wie in Fig. 1 dargestellt zwischen ein 5 cm x 5 cm Bitumen-Klebstoff-Muster und der Membran ein 10 cm x 10 cm Muster der zu prüfenden Folie gelegt und der Massentransfer bestimmt. Ein Versuch wurde ohne dazwischenliegende Folie durchgeführt. Die Anordnung wurde 1 Woche bei 70°C gehalten und dann die Massen-änderung bestimmt. Die Bitumenmuster wurden aus messtechnischen Gründen so klein gewählt, damit die Proben unter den Prüfbedingungen nicht vollständig verkleben (Bitumen fliesst stark), da sonst eine quantitative Massenänderungsbestimmung nicht mehr möglich wäre.

Beim Bitumen-Klebstoff handelt es sich um eine kaltselbstklebende Formulierung der Firma FAIST ChemTec.

Der absolute Massentransfer (Masse nachher minus Masse vorher) ist in folgender Tabelle für die Membran (Massenzunahme) und den Bitumenklebstoff (Massenabnahme) dargestellt.

**Massenzunahme Membran / Massenabnahme Bitumen-Klebstoff (alle Angaben in Gramm)**

| | PE-Membran | | PP-Membran | |
|---|---|---|---|---|
| Barriere | Massenzunahme PE-Membran | Massenabnahme Bitumen | Massenzunahme PP-Membran | Massenabnahme Bitumen |
| ohne | 0,2340 | - | 0,3471 | - |
| LDPE-Folie | 0,1033 | -0,1066 | 0,1908 | -0,1944 |
| PP-Folie | 0,1612 | -0,1630 | 0,1881 | -0,1901 |
| BOPP-Folie | 0,0213 | -0,0218 | 0,0491 | -0,0459 |
| LDPE-EVOH-Folie | -0,0027 | -0,0012 | -0,0002 | 0,0000 |
| PP-PA-Folie | -0,0028 | -0,0043 | -0,0017 | -0,0042 |
| PP-PA-Release Liner | -0,0027 | 0,0003 | -0,0028 | 0,0003 |

Es wird ersichtlich, dass die Migration mit dem Einsatz einer erfindungsgemäß eingesetzten Barrierefolie unterbunden werden kann.

### Migrationstest für Hotmelt-Klebstoffe

Bei der Prüfung mit Schmelzkleber wurden etwas größere Klebstoffmuster gewählt. Der Schmelzkleber fließt nicht so stark wie Bitumen. Ansonsten wurde die Prüfung wie beim Migrationstest für Bitumen durchgeführt und der Massentransfer bestimmt. Für die Prüfungen wurden 600 g/m² des Schmelzklebers SikaMelt® 9209HT von Sika verwendet. Die Prüfanordnung ist in Fig. 2 dargestellt.

Es wurden die gleichen Folientypen und Membranen wie beim Test mit Bitumen geprüft. Zusätzlich wurde noch eine Versuchsfolie von Huhtamaki geprüft, bei der es sich ebenfalls um eine modifizierte PP-PA-Multilayerfolie handelt.

Der absolute Massentransfer (Masse nachher minus Masse vorher) ist in folgender Tabelle für die Membran (Massenzunahme) und den Schmelzkleber (Massenabnahme) dargestellt.

**Massenzunahme Membran / Massenabnahme Schmelzkleber (alle Angaben in Gramm)**

| | PE-Membran | | PP-Membran | |
|---|---|---|---|---|
| Barriere | Massenzunahme PE-Membran | Massenabnahme Schmelzkleber | Massenzunahme PP-Membran | Massenabnahme Schmelzkleber |
| ohne | 0,1324 | - | 0,3012 | - |
| LDPE-Folie | 0,1524 | -0,1572 | 0,3060 | -0,3135 |
| PP-Folie | 0,2593 | -0,2649 | 0,4263 | -0,4299 |
| BOPP-Folie | 0,0582 | -0,0635 | 0,1045 | -0,1045 |
| LDPE-EVOH-Folie | -0,0018 | -0,0031 | 0,0029 | 0,0052 |
| PP-PA-Folie | -0,0027 | -0,0068 | 0,0037 | -0,0080 |
| PP-PA-Release Liner | -0,0016 | -0,0030 | 0,0066 | -0,0099 |
| PP-PA-Versuchsfolie | -0,0028 | -0,0240 | -0,0012 | -0,0070 |

Es wurde gefunden, dass auch gegen Schmelzkleber die Folien mit EVOH- oder PA-Barriere hervorragend sperren.

### Herstellungsbeispiel 1

Eine Abdichtungsmembran aus einer LDPE-EVOH-Folie und einer ethylenbasierten Polyolefinmembran (PE-Membran) wurde hergestellt. Die Folie und die Membran entsprechen denen, die vorstehend bei den Migrationstests eingesetzt wurden. Hierfür wurde das Material für die PE-Membran bei einer Temperatur von ca. 180°C extrudiert und die LDPE-EVOH-Folie wurde mit der extrudierten Formschmelze der PE-Membran im Glättwerk der Extrusionslinie verbunden. Die Hitze der Kunststoffschmelze reicht für das Verschmelzen mit der Barrierfoliendeckschicht aus und es ergibt sich ein dauerhaft beständiger Verbund mit der Polyolefinmembran.

Die Barrierefolie kann aufgrund des relativ tiefen Schmelzpunktes des LDPE nur leicht vorgeheizt werden. Im Glättwerk muss der Wulst klein gehalten werden und der Wulst soll sich auf die Folie drehen, damit diese sofort fixiert wird und sich aufgrund der Schrumpfneigung der Barriere keine Falten bilden können. Auf diese Weise wurde eine Abdichtungsmembran 1 hergestellt.

### Herstellungsbeispiel 2

Eine Abdichtungsmembran aus einer PP-PA-Folie (Versuchsfolie Huhtamaki) und einer propylenbasierten Polyolefinmembran (PP-Membran) wurde hergestellt. Die Folie und die Membran entsprechen denen, die vorstehend bei den Migrationstests eingesetzt wurden. Hierfür wurde das Material für die PP-Membran bei einer Temperatur von ca. 190°C extrudiert und die PP-PA-Folie (Versuchsfolie Huhtamaki) wurde mit der extrudierten Formschmelze der PP-Membran im Glättwerk der Extrusionslinie verbunden.

Aufgrund des hohen Schmelzpunktes der PP-Deckschicht der Barrierefolie wurde die Barrierefolie auf der ersten Glättwerkswalze relativ stark vorgeheizt. Die Walzentemperatur betrug etwa 80°C. Dies stellt aufgrund der guten Temperaturbeständigkeit der Folie kein Problem dar und ermöglicht eine gute Haftung.

Auch hier soll der Wulst klein und auf die Folie drehend eingestellt werden. Es hat sich gezeigt, dass durch das starke Vorwärmen der Barrierefolie auch die Spannungen, welche durch das Abkühlen zwischen der Folie und der Schmelze entstehen, verringert und damit ein Schüsseln der Membran weitgehend verhindert werden kann. Auf diese Weise wurde eine Abdichtungsmembran 2 hergestellt.

### Eigenschaften der Abdichtungsmembranen 1 und 2

Überraschenderweise bleiben die hergestellten Membranen 1 und 2 trotz Barriereschicht mit herkömmlichen thermischen Schweissgeräten, z.B. mit einem Handschweißgerät der Firma LEISTER, verschweißbar. Obwohl die Mehrschichtfolien sehr dünn sind, wird der Schichtaufbau beim Kaschieren und Verschweißen nicht beschädigt. Die Polyolefinschichten bleiben immer flächig erhalten und das Barrierematerial im Kern stört die Verbindung zu keinem Zeitpunkt.

Die Abdichtungsmembran 1 wurde 1 Jahr bei 60°C in Wasser gelagert und wies danach noch einen hervorragenden Verbund auf.

Die Abdichtungsmembran 2 wurde 1/2 Jahr bei 60°C in Wasser gelagert und zeigte danach keinerlei Ablösungserscheinungen.

### Vergleichsbeispiel

Eine PET-Folie und eine Weich-PVC-Membran wurden mit einem Acrylat- oder PU-Kaschierklebstoff miteinander verbunden. Dieser mit einem Kaschierklebstoff erhaltene Verbund zeigte keine ausreichende Wasserbeständigkeit. Schon nach einer Wasserlagerung von 8 Wochen bei 60°C zeigten sich Ablösungserscheinungen.

Die thermische, nach Werkstoff abgestimmte Verbindung ist gegenüber der Kaschierung mit Kaschierklebstoffen sowohl aufgrund der höheren Kosten für den Kaschierklebstoffauftrag als auch der Performance (dauerhafte, sehr gute Haftung) deutlich vorzuziehen.

### Bezugszeichenliste

- 1: thermoplastische Polyolefinmembran
- 2: Barrierefolie
- 3: Klebstoffschicht
- 4: Release Liner

## Patentansprüche

1. Abdichtungsmembran umfassend
a) eine thermoplastische Polyolefinmembran umfassend mindestens ein Polymer ausgewählt aus Ethylen-Homopolymer, Ethylen-Copolymer, Propylen-Homopolymer oder Propylen-Copolymer und
b) eine Barrierefolie umfassend
b1) eine Barierreschicht umfassend mindestens ein Polymer ausgewählt aus Ethylen-Vinylalkohol-Copolymer, Polyamid oder Polyester und
b2) eine Deckschicht umfassend mindestens ein Polymer ausgewählt aus Ethylen-Homopolymer, Ethylen-Copolymer, Propylen-Homopolymer oder Propylen-Copolymer,
wobei die Barrierefolie vollflächig oder teilflächig auf die Polyolefinmembran laminiert ist, so dass die Deckschicht der Barrierefolie direkt mit der Polyolefinmembran verbunden ist, und die Deckschicht und die Polyolefinmembran beide ethylenbasiert sind oder die Deckschicht und die Polyolefinmembran beide propylenbasiert sind, wobei in einer ethylenbasierten Polyolefinmembran oder Deckschicht der Gewichtsanteil an Ethylen-Homopolymeren und/oder Ethylen-Copolymeren mehr als 50 Gew.-%, bezogen auf das Gesamtgewicht der Polymere in der Polyolefinmembran bzw. Deckschicht, beträgt und in einer propylenbasierten Polyolefinmembran oder Deckschicht der Gewichtsanteil an Propylen-Homopolymeren und/oder Propylen-Copolymeren mehr als 50 Gew.-%, bezogen auf das Gesamtgewicht der Polymere in der Polyolefinmembran bzw. Deckschicht, beträgt und wobei die Barrierefolie eine Schichtdicke im Bereich von 30 bis 130 µm aufweist und wobei die Schichtdicke der Deckschicht der Barrierefolie von 10 bis 60 µm beträgt.

2. Abdichtungsmembran nach Anspruch 1, ferner umfassend eine Klebstoffschicht, vorzugsweise eine Haftklebstoffschicht, die auf der Seite der Barrierefolie angeordnet ist, die entgegensetzt zu der Seite der Barrierefolie ist, auf der sich die thermoplastische Polyolefinmembran befindet, wobei auf der Außenseite der Klebstoffschicht gegebenenfalls ein Release Liner angeordnet ist.

3. Abdichtungsmembran nach Anspruch 2, wobei der Klebstoff, insbesondere der Haftklebstoff, der Klebstoffschicht ausgewählt ist aus einem Bitumen-Klebstoff, einem Schmelzkleber, insbesondere einem PSA-Schmelzkleber oder einem hitzeaktivierbaren Schmelzkleber, oder einer Kautschuk-Klebemasse.

4. Abdichtungsmembran nach irgendeinem der Ansprüche 1 bis 3, wobei die thermoplastische Polyolefinmembran eine Schichtdicke im Bereich von 0,1 bis 10 mm aufweist.

5. Abdichtungsmembran nach irgendeinem der Ansprüche 1 bis 4, wobei die Barrierefolie eine Blasfolie ist.

6. Abdichtungsmembran nach irgendeinem der Ansprüche 1 bis 5, wobei die thermoplastische Polyolefinmembran thermoplastisches Elastomer auf Olefinbasis umfasst.

7. Abdichtungsmembran nach irgendeinem der Ansprüche 1 bis 6, wobei die thermoplastische Polyolefinmembran ein- oder mehrschichtig, insbesondere ein- oder zweischichtig, ist und gegebenenfalls mindestens ein Additiv ausgewählt aus Flammschutzmitteln, Pigmenten, Stabilisatoren, Antioxidationsmitteln oder Füllstoffen enthält.

8. Abdichtungsmembran nach irgendeinem der Ansprüche 1 bis 7, wobei die Barrierefolie zwei oder mehr, z.B. 2 bis 5, Schichten umfasst.

9. Abdichtungsmembran nach irgendeinem der Ansprüche 1 bis 8, wobei die thermoplastische Polyolefinmembran mindestens ein Polymer ausgewählt aus Polyethylen mit hoher Dichte (HDPE), Polyethylen mit mittlerer Dichte (MDPE), Polyethylen mit tiefer Dichte (LDPE), Polyethylen (PE), Polypropylen (PP), Ethylen-Vinylacetat-Copolymer (EVA), Ethylen-n-Alken-Copolymer oder Propylen-n-Alken-Copolymer, wie Ethylen-Propylen-Copolymer (EPM) oder Ethylen-Propylen-Dien-Copolymer (EPDM), umfasst.

10. Abdichtungsmembran nach irgendeinem der Ansprüche 1 bis 9, wobei die Deckschicht der Barrierefolie mindestens ein Polymer ausgewählt aus Polyethylen mit hoher Dichte (HDPE), Polyethylen mit mittlerer Dichte (MDPE), Polyethylen mit tiefer Dichte (LDPE), Polyethylen (PE), Polypropylen (PP), Ethylen-Vinylacetat-Copolymer (EVA), Maleinsäureanhydrid-gepfropftes Polyethylen oder Maleinsäureanhydrid-gepfropftes Polypropylen umfasst.

11. Abdichtungsmembran nach irgendeinem der Ansprüche 1 bis 10, wobei die Abdichtungsmembran
eine ethylenbasierte Polyolefinmembran umfassend Ethylen-Copolymer, eine Barierrefolie umfassend eine EVOH- oder PA-Barriereschicht und eine LDPE-Deckschicht, und eine Klebstoffschicht aus einem Klebstoff ausgewählt aus Bitumenklebstoff, PSA-Schmelzkleber, hitzeaktivierbarem Schmelzkleber und Kautschuk-Klebemasse ist, wobei die Barrierefolie und die Klebstoffschicht vollflächig oder auf den Randbereichen der Polyolefinmembran angeordnet sind, oder
eine propylenbasierte Polyolefinmembran umfassend Polypropylen, eine Barierrefolie umfassend eine EVOH- oder PA-Barriereschicht und eine PP-Deckschicht, und gegebenenfalls eine Klebstoffschicht aus einem Klebstoff ausgewählt aus Bitumenklebstoff, PSA-Schmelzkleber, hitzeaktivierbarem Schmelzkleber und Kautschuk-Klebemasse ist, wobei die Barrierefolie und gegebenenfalls die Klebstoffschicht vollflächig auf der Polyolefinmembran angeordnet sind.

12. Abdichtungsmembran nach irgendeinem der Ansprüche 1 bis 11, wobei mindestens ein in der Deckschicht enthaltenes Polymer einen niedrigeren Schmelzpunkt als ein in der Polyolefinmembran enthaltenes Polymer aufweist.

13. Verfahren zur Herstellung einer Abdichtungsmembran nach irgendeinem der Ansprüche 1 bis 12, wobei das Material für die thermoplastische Polyolefinmembran extrudiert wird, vorzugsweise durch eine Breitschlitzdüse, und die extrudierte Formschmelze im Glättwerk der Extrusionsanlage, insbesondere bei der ersten Glättwerkswalze, auf die Deckschicht der Barrierefolie aufgebracht und damit verbunden wird.

14. Verfahren nach Anspruch 13, wobei die Barriefolie vor oder während der Aufbringung der Formschmelze aufgeheizt wird, insbesondere wenn propylenbasierte Polyolefinmembranen und propylenbasierte Deckschichten eingesetzt werden.

15. Verwendung einer Abdichtungsmembran nach irgendeinem der Ansprüche 1 bis 12 zur Abdichtung im Hoch- oder Tiefbau.

## Claims

1. Sealing membrane comprising
a) a thermoplastic polyolefin membrane comprising at least one polymer selected from ethylene homopolymer, ethylene copolymer, propylene homopolymer or propylene copolymer, and
b) a barrier film comprising
b1) a barrier layer comprising at least one polymer selected from ethylene-vinyl alcohol copolymer, polyamide or polyester, and
b2) an outer layer comprising at least one polymer selected from ethylene homopolymer, ethylene copolymer, propylene homopolymer or propylene copolymer,
where the barrier film has been laminated to all or part of the surface of the polyolefin membrane in a manner that gives direct bonding between the polyolefin membrane and the outer layer of the barrier film, and both the outer layer and the polyolefin membrane are ethylene-based or both the outer layer and the polyolefin membrane are propylene-based, where in an ethylene-based polyolefin membrane or outer layer the proportion by weight of ethylene homopolymers and/or ethylene copolymers is more than 50% by weight, based on the total weight of the polymers in the polyolefin membrane and respectively in the outer layer, and in a propylene-based polyolefin membrane or outer layer the proportion by weight of propylene homopolymers and/or propylene copolymers is more than 50% by weight, based on the total weight of the polymers in the polyolefin membrane and respectively in the outer layer, and where the layer thickness of the barrier film is in the range of 30 to 130 µm, and where the layer thickness of the outer layer of the barrier film is 10 to 60 µm.

2. Sealing membrane according to Claim 1, moreover comprising an adhesive layer, preferably a pressure-sensitive-adhesive layer, arranged on that side of the barrier film that is opposite to that side of the barrier film on which the thermoplastic polyolefin membrane is present, there being optionally a release liner arranged on the external side of the adhesive layer.

3. Sealing membrane according to Claim 2, where the adhesive, in particular the pressure-sensitive adhesive, of the adhesive layer is selected from a bitumen adhesive, a hotmelt adhesive, in particular a hotmelt PSA adhesive or a heat-activatable hotmelt adhesive, or a rubber adhesive.

4. Sealing membrane according to any one of Claims 1 to 3, where the layer thickness of the thermoplastic polyolefin membrane is in the range of 0.1 to 10 mm.

5. Sealing membrane according to any one of Claims 1 to 4, where the barrier film is a blown film.

6. Sealing membrane according to any one of Claims 1 to 5, where the thermoplastic polyolefin membrane comprises olefin-based thermoplastic elastomer.

7. Sealing membrane according to any one of Claims 1 to 6, where the thermoplastic polyolefin membrane has one or more layers, in particular one or two layers, and optionally comprises at least one additive selected from flame retardants, pigments, stabilizers, antioxidants or fillers.

8. Sealing membrane according to any one of Claims 1 to 7, where the barrier film comprises two or more, for example two to five, layers.

9. Sealing membrane according to any one of Claims 1 to 8, where the thermoplastic polyolefin membrane comprises at least one polymer selected from high-density polyethylene (HDPE), medium-density polyethylene (MDPE), low-density polyethylene (LDPE), polyethylene (PE), polypropylene (PP), ethylene-vinyl acetate copolymer (EVA), ethylene-n-alkene copolymer or propylene-n-alkene copolymer, such as ethylene-propylene copolymer (EPM), or ethylene-propylene-diene copolymer (EPDM).

10. Sealing membrane according to any one of Claims 1 to 9, where the outer layer of the barrier film comprises at least one polymer selected from high-density polyethylene (HDPE), medium-density polyethylene (MDPE), low-density polyethylene (LDPE), polyethylene (PE), polypropylene (PP), ethylene-vinyl acetate copolymer (EVA), maleic-anhydride-grafted polyethylene or maleic-anhydride-grafted polypropylene.

11. Sealing membrane according to any one of Claims 1 to 10, where the sealing membrane
is an ethylene-based polyolefin membrane comprising ethylene copolymer, a barrier film comprising an EVOH barrier layer or PA barrier layer and an LDPE outer layer, and an adhesive layer made of an adhesive selected from bitumen adhesive, hotmelt PSA adhesive, heat-activatable hotmelt adhesive and rubber adhesive, where the barrier film and the adhesive layer are arranged on all of the surface of the polyolefin membrane or on the peripheral regions thereof, or
is a propylene-based polyolefin membrane comprising polypropylene, a barrier film comprising an EVOH barrier layer or PA barrier layer and a PP outer layer, and optionally an adhesive layer made of an adhesive selected from bitumen adhesive, hotmelt PSA adhesive, heat-activatable hotmelt adhesive and rubber adhesive, where the barrier film and optionally the adhesive layer are arranged on all of the surface of the polyolefin membrane.

12. Sealing membrane according to any one of Claims 1 to 11, where at least one polymer comprised in the outer layer has a lower melting point than a polymer comprised in the polyolefin membrane.

13. Process for the production of a sealing membrane according to any one of Claims 1 to 12, where the material for the thermoplastic polyolefin membrane is extruded, preferably through a slot die, and in the polishing stack of the extrusion system, in particular at the first polishing-stack roll, the extruded shaped melt is applied to the outer layer of the barrier film and thus bonded thereto.

14. Process according to Claim 13, where, in particular when propylene-based polyolefin membranes and propylene-based outer layers are used, the barrier film is heated prior to or during the application of the shaped melt.

15. Use of a sealing membrane according to any one of Claims 1 to 12 for sealing purposes in construction or in civil engineering.

## Revendications

1. Membrane d'étanchéité comprenant
a) une membrane de polyoléfine thermoplastique comprenant au moins un polymère choisi parmi un homopolymère d'éthylène, un copolymère d'éthylène, un homopolymère de propylène et un copolymère de propylène et
b) une feuille barrière comprenant
b1) une couche barrière comprenant au moins un polymère choisi parmi un copolymère éthylène-alcool vinylique, un polyamide et un polyester et
b2) une couche de couverture comprenant au moins un polymère choisi parmi un homopolymère d'éthylène, un copolymère d'éthylène, un homopolymère de propylène et un copolymère de propylène,
la feuille barrière étant stratifiée sur toute la surface ou sur une partie de la surface de la membrane de polyoléfine, de sorte que la couche de couverture de la feuille barrière est directement reliée avec la membrane de polyoléfine, et la couche de couverture et la membrane de polyoléfine étant toutes deux à base d'éthylène ou la couche de couverture et la membrane de polyoléfine étant toutes deux à base de propylène, où dans une membrane de polyoléfine ou une couche de couverture à base d'éthylène, la proportion en poids d'homopolymères d'éthylène et/ou de copolymères d'éthylène est supérieure à 50 % en poids, par rapport au poids total des polymères dans la membrane de polyoléfine ou la couche de couverture, et dans une membrane de polyoléfine ou une couche de couverture à base de propylène, la proportion en poids d'homopolymères de propylène et/ou de copolymères de propylène est supérieure à 50 % en poids, par rapport au poids total des polymères dans la membrane de polyoléfine ou la couche de couverture, et la feuille barrière présentant une épaisseur de couche dans la plage de 30 à 130 µm et l'épaisseur de couche de la couche de couverture de la feuille barrière étant de 10 à 60 µm.

2. Membrane d'étanchéité selon la revendication 1, comprenant en outre une couche d'adhésif, de préférence une couche d'adhésif de contact, qui est disposée sur le côté de la feuille barrière qui est opposé au côté de la feuille barrière sur lequel se trouve la membrane de polyoléfine thermoplastique, une couche de détachement étant éventuellement disposée sur le côté extérieur de la couche d'adhésif.

3. Membrane d'étanchéité selon la revendication 2, l'adhésif, en particulier l'adhésif de contact, de la couche d'adhésif étant choisi parmi un adhésif de bitume, un adhésif thermofusible, en particulier un adhésif thermofusible de type PSA ou un adhésif thermofusible activable par la chaleur, et une masse d'adhésif de caoutchouc.

4. Membrane d'étanchéité selon l'une quelconque des revendications 1 à 3, la membrane de polyoléfine thermoplastique présentant une épaisseur de couche dans la plage de 0,1 à 10 mm.

5. Membrane d'étanchéité selon l'une quelconque des revendications 1 à 4, la feuille barrière étant une feuille soufflée.

6. Membrane d'étanchéité selon l'une quelconque des revendications 1 à 5, la membrane de polyoléfine thermoplastique comprenant un élastomère thermoplastique à base d'oléfine.

7. Membrane d'étanchéité selon l'une quelconque des revendications 1 à 6, la membrane de polyoléfine thermoplastique étant monocouche ou multicouche, en particulier monocouche ou bicouche, et contenant éventuellement au moins un additif choisi parmi des agents ignifugeants, des pigments, des stabilisants, des antioxydants et des charges.

8. Membrane d'étanchéité selon l'une quelconque des revendications 1 à 7, la feuille barrière comprenant deux couches ou plus, par ex. 2 à 5.

9. Membrane d'étanchéité selon l'une quelconque des revendications 1 à 8, la membrane de polyoléfine thermoplastique comprenant au moins un polymère choisi parmi un polyéthylène haute densité (HDPE), un polyéthylène moyenne densité (MDPE), un polyéthylène basse densité (LDPE), un polyéthylène (PE), un polypropylène (PP), un copolymère éthylène-acétate de vinyle (EVA), un copolymère éthylène-n-alcène ou un copolymère propylène-n-alcène, comme un copolymère éthylène-propylène (EPM) ou un copolymère éthylène-propylène-diène (EPDM).

10. Membrane d'étanchéité selon l'une quelconque des revendications 1 à 9, la couche de couverture de la feuille barrière comprenant au moins un polymère choisi parmi un polyéthylène haute densité (HDPE), un polyéthylène moyenne densité (MDPE), un polyéthylène basse densité (LDPE), un polyéthylène (PE), un polypropylène (PP), un copolymère éthylène-acétate de vinyle (EVA), un polyéthylène greffé avec de l'anhydride maléique et un polypropylène greffé avec de l'anhydride maléique.

11. Membrane d'étanchéité selon l'une quelconque des revendications 1 à 10, la membrane d'étanchéité étant une membrane de polyoléfine à base d'éthylène comprenant un copolymère d'éthylène, une feuille barrière comprenant une couche barrière d'EVOH ou de PA et une couche de couverture de LDPE, et une couche d'adhésif composée d'un adhésif choisi parmi un adhésif de bitume, un adhésif thermofusible de type PSA, un adhésif thermofusible activable par la chaleur et une masse d'adhésif de caoutchouc,
la feuille barrière et la couche d'adhésif étant disposées sur toute la surface ou sur les régions de bord de la membrane de polyoléfine, ou
une membrane de polyoléfine à base de propylène comprenant du polypropylène, une feuille barrière comprenant une couche barrière d'EVOH ou de PA et une couche de couverture de PP, et éventuellement une couche d'adhésif composée d'un adhésif choisi parmi un adhésif de bitume, un adhésif thermofusible de type PSA, un adhésif thermofusible activable par la chaleur et une masse d'adhésif de caoutchouc,
la feuille barrière et éventuellement la couche d'adhésif étant disposée(s) sur toute la surface de la membrane de polyoléfine.

12. Membrane d'étanchéité selon l'une quelconque des revendications 1 à 11, au moins un polymère contenu dans la couche de couverture présentant un point de fusion inférieur à celui d'un polymère contenu dans la membrane de polyoléfine.

13. Procédé pour la préparation d'une membrane d'étanchéité selon l'une quelconque des revendications 1 à 12, le matériau pour la membrane de polyoléfine thermoplastique étant extrudé, de préférence par une filière plate, et la masse fondue à former extrudée étant appliquée sur la couche de couverture de la feuille barrière et étant ainsi reliée à celle-ci dans la lisseuse de l'installation d'extrusion, en particulier au niveau du premier rouleau de la lisseuse.

14. Procédé selon la revendication 13, la feuille barrière étant chauffée avant ou pendant l'application de la masse fondue à former, en particulier lorsque des membranes de polyoléfine à base de propylène et des couches de couverture à base de propylène sont utilisées.

15. Utilisation d'une membrane d'étanchéité selon l'une quelconque des revendications 1 à 12 pour l'étanchéité dans le bâtiment ou le génie civil.
